Europäisches Patentamt

European Patent Office

Office européen des brevets

(11) Publication number: **0 055 120**
**B1**

(12) **EUROPEAN PATENT SPECIFICATION**

(45) Date of publication of patent specification: **14.11.84**

(21) Application number: **81306009.2**

(22) Date of filing: **21.12.81**

(51) Int. Cl.³: **F 02 B 77/08, G 01 M 15/00, G 01 S 15/88**

(54) Improvements in or relating to methods of and apparatuses for indicating a predetermined position of a piston or crankshaft of a piston engine.

(30) Priority: **22.12.80 GB 8040966**
**24.09.81 GB 8128876**

(43) Date of publication of application:
**30.06.82 Bulletin 82/26**

(45) Publication of the grant of the patent:
**14.11.84 Bulletin 84/46**

(84) Designated Contracting States:
**AT DE FR IT NL SE**

(56) References cited:
**DE-A-2 655 064**
**FR-A-2 461 814**
**GB-A-2 043 250**
**US-A-3 703 825**
**US-A-3 930 404**

**RESEARCH DISCLOSURE, no. 160, August
1977, abstract no. 16052, VANT. HANTS. (GB),
"Engine Cylinder Combustion Performance
Sensor", page 62**

(73) Proprietor: **FROUDE CONSINE LIMITED**
**Gregory's Bank**
**Worcester, WR3 8AD (GB)**

(72) Inventor: **Hitchcock, Keith Norman**
**2 Norton Close**
**Worcester WR3 8AD (GB)**

(74) Representative: **Robinson, John Stuart et al**
**Marks & Clerk 57/60 Lincoln's Inn Fields**
**London WC2A 3LS (GB)**

Courier Press, Leamington Spa, England.

## Description

The present invention relates to a method of and apparatus for indicating a predetermined position of a piston or crankshaft of a piston engine. Such method and apparatus may be used to determine top dead centre of a piston of, for instance, a petrol or diesel internal combustion engine.

There is known a method of indicating a predetermined position of a piston or crankshaft of a piston engine, comprising:— applying piston-position-responsive transducer means to a cylinder of the engine; obtaining from the transducer means signals dependent upon the position of the piston in the cylinder; and relating said signals to another signal representing the rotational position of the crankshaft or representing time. There is also correspondingly known an apparatus for indicating a predetermined position of a piston or crankshaft of a piston engine, comprising:— a piston-position-responsive transducer means adapted to be, or capable of being, applied to a cylinder of the engine, to provide signals dependent upon the position of the piston in the cylinder; means for providing another signal representing the rotational position of the crankshaft or representing time; and signal-processing means to enable indication of said predetermined position from all of said signals. In relation to this, reference is directed to West German laid-open patent specification (Offenlegungsschrift) 26 55 064 in the name of Daimler-Benz A.G. ("DE—A—26 55 064") which discloses a method of, and apparatus for, determining top dead centre of a piston of an internal combustion piston engine by means of a position-transducer responsive to the position of the piston within the cylinder. However, the position-transducer is capacitive (or possibly inductive) and is located internally of the engine at the top of the cylinder, to sense the gradual approach towards the top of the cylinder, and recession therefrom, of the piston, as the piston rises and falls in the cylinder. There is no sudden change in the output of the transducer as the piston passes any particular point in the cylinder and hence no means of precisely determining when the piston is at, or passes, any particular point in the cylinder. Instead, the output is part-sinusoidal, as would be expected. Because the transducer is internal, the engine has to be modified by removal of a spark plug to take the transducer. DE—A—26 55 064 does not actually disclose any means for providing a signal representing the rotational position of the crankshaft, but we acknowledge herein that such means would not be difficult to provide in some form or other.

British patent specification No. 2 043 250 A, in the name of Davy-Loewy Limited, discloses a method of, and apparatus for, detecting the position of a piston in a cylinder by means of an ultrasonic transducer detecting a signal from an ultrasonic beam within the cylinder. However, the cylinder is one containing hydraulic oil, with the piston moving relatively slowly, and the ultrasonic beam being in a liquid medium (i.e. the hydraulic oil) as opposed to a gaseous medium (as in an internal combustion engine cylinder). Furthermore, the transducer is at one end of the cylinder and detects only a gradual approach towards, or recession from, the transducer of the piston, not the piston passing any particular point.

According to one aspect of the invention there is provided a method of indicating a predetermined position of a piston or crankshaft of a piston engine, comprising:— applying piston-position-responsive transducer means to a cylinder of the engine; obtaining from the transducer means signals dependent upon the position of the piston in the cylinder; and relating said signals to another signal representing the rotational position of the crankshaft or representing time; characterised in that:— the transducer means comprises an ultrasonic transmitter applied externally to a side of the engine to transmit an ultrasonic beam in the region of a given point of the cylinder, intermediate the ends of the piston stroke, for producing two ultrasonic signals responsive to a given part of the piston passing said given point of the cylinder on its upward and downward strokes, respectively, and an ultrasonic receiver applied externally to a side of the engine to receive said two ultrasonic signals.

According to another aspect of the invention there is provided an apparatus for indicating a predetermined position of a piston (11) or crankshaft of a piston engine (1) comprising:— a piston-position-responsive transducer means (10, 10') adapted to be, or capable of being applied to a cylinder of the engine (1) to provide signals dependent upon the position of the piston (11) in the cylinder, means (8, 8') for providing another signal representing the rotational position of the crankshaft or representing time; and signal-processing means (9) to enable indication of said predetermined position from all of said signals; characterised in that:— the transducer means (10, 10') comprises an ultrasonic transmitter adapted to be, or capable of being, applied to a side of the engine (1) to transmit an ultrasonic beam in the region of a given point of the cylinder, intermediate the ends of the piston stroke, for producing two ultrasonic signals responsive to a given part of the piston (11) passing said given point of the cylinder on its upward and downward strokes, respectively, and an ultrasonic receiver adapted to be, or capable of being, applied externally to a side of the engine (1) to receive said two ultrasonic signals.

The invention will be described, by way of example, with reference to the accompanying drawings, in which:

Figure 1 is a side view of an internal combustion engine fitted with an apparatus constituting a preferred embodiment of the invention; and

Figure 2 is a fragmentary cross-sectional view taken on line I—I of Figure 1.

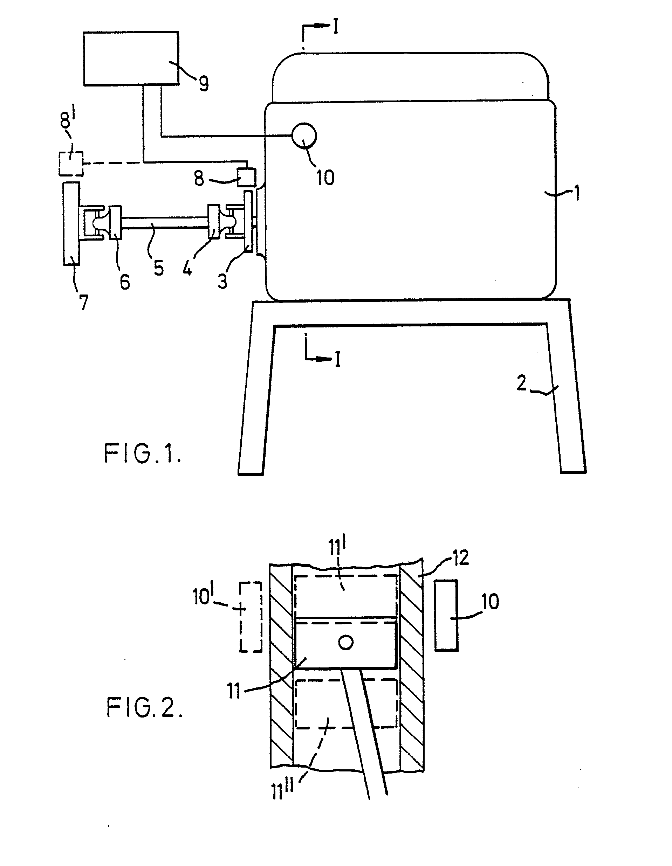

Figure 1 shows an internal combustion engine 1, for instance a compression ignition engine, mounted on a test stand 2, for instance so as to allow various timing checks to be performed on the engine without requiring any dismantling thereof. The crankshaft of the engine 1 is connected to a toothed flywheel 3 on which is mounted a slave flywheel connected to a first universal joint 4. The universal joint 4 is connected *via* a shaft 5 and a second universal joint 6 to a further flywheel 7 or the like, which may form part of further testing apparatus. A transducer 8 is mounted adjacent the toothed rim of the flywheel 3 and is connected to a signal processing circuit 9. The transducer 8 may be an optical transducer comprising a light emitter arranged to direct a beam of light to a photoelectric transducer such that the individual teeth of the flywheel 3 interrupt the beam. Alternatively, the transducer 8 may be of the proximity-sensitive type so as to provide a signal when each tooth of the flywheel 3 is adjacent the transducer. Alternatively, if more convenient, the transducer 8 may be replaced by the transducer 8′ shown in broken lines, which is disposed adjacent the toothed flywheel 7. Indeed, the transducer 8 may be replaced by any transducer capable of providing a series of signals each corresponding to an instantaneous incremental position of the crankshaft of the engine 1. The signals are repeated periodically for each complete rotation of the crankshaft.

The signal processing circuit 9 is further connected to an ultrasonic transducer arrangement 10 which is mounted on the side of the cylinder block of the engine 1. The transducer 10 may be of the type which responds to reflected ultrasonic waves as shown in solid lines in Figure 2 and thus incorporates an ultrasonic transmitter and ultrasonic receiver, both directed towards the adjacent cylinder of the engine. Alternatively, the transducer may comprise an ultrasonic transmitter at 10 in Figure 2 and an ultrasonic receiver 10′ disposed on opposite sides of the cylinder so as to be responsive to the beam of radiation received from the transducer 10.

The ultrasonic technique used for providing the first and second signals may be a pulse echo technique, a through transmission technique, a resonance technique, or a combination thereof. However, the pulse echo technique is preferred. It is also preferred to use a focussed system whereby the ultrasonic beam is brought to a focal point or zone at the bore surface of the cylinder of the engine.

The piston and/or the piston ring or rings may be used as means for reflecting the ultrasonic waves so as to provide the first and second signals. Such a technique is possible where the engine being tested is such that the cylinder block has a solid web of material between the or one of the cylinder bores and the exterior of the engine at which the ultrasonic beam is to be received. Further, the solid web must be at a position such that the ultrasonic beam is directed towards the cylinder at a point intermediate the ends of a stroke of the piston therein. In this respect, an ultrasonic probe is normally coupled to the engine block on the exterior surface, for instance by means of oil or some other coupling medium, and is oriented so as to direct the ultrasonic beam in a radial plane with respect to the cylinder and at right angles to a tangent to the cylinder bore.

However, a preferred technique involves directing the ultrasonic beam towards the cylinder in the manner described above, but utilising the damping of the signal received from the bore surface of the cylinder by the piston and/ or the piston ring or rings. Thus, when a piston or a ring thereof is not in the ultrasonic beam, an ultrasonic signal is reflected back from the bore surface of the cylinder and is detected by an ultrasonic transducer. However, when the piston or a ring thereof passes through the beam, the ultrasonic signal is damped by the piston or the ring so that the level of the signal reflected to the transducer is substantially reduced. An advantage of this technique is that it is capable of operation when the ultrasonic beam is directed through a water jacket or the like surrounding the cylinder such that no web of solid material, as required in the above mentioned method, is available for the introduction of the ultrasonic beam. Thus, although the presence of a water jacket through which the ultrasonic beam must pass causes some attenuation of the ultrasonic beam, nevertheless the damping technique is capable of providing sufficiently good first and second signals, so that the present invention is applicable to virtually any form of piston and cylinder engine, no matter what the actual configuration of the cylinder block. This technique is also of advantage as it is capable of use with any form of cylinder liner in such an engine. Thus, the invention may be used equally well with engines whose cylinders are provided with wet liners or with dry liners.

The frequency of the ultrasonic sound beam is generally above 1 MHz. However, the frequency may be varied as necessary and the actual frequency used depends, to some extent, on the particular engine to be tested.

Figure 2 is a cross-sectional diagrammatic view showing the cylinder jacket which the transducer 10 is mounted. The transducer is mounted so as to direct a narrow beam of ultrasonic sound through the wall of the cylinder block and across the cylinder at a height such that the piston 11 interrupts the beam at and adjacent its top dead centre position (illustrated in broken lines at 11′). At other positions of the piston 11, for instance at bottom dead centre as indicated in broken lines at 11″, the piston 11 remains out of the ultrasonic beam produced by the transducer 10.

The transducer 10 is mounted without an air gap on the side wall 12 of the cylinder block of the engine so as to prevent undesirable attenuation of the ultrasonic waves. In the case of a transducer 10 as shown in solid lines in Figure 2, the ultrasonic waves pass through the piston for instance through one of the piston rings in intimate contact with the internal surface of the cylinder, when the piston is at or near its top dead centre position. The ultrasonic waves are thus not reflected back to the transducer 10. When the piston 11 is in a position such that it is not in the ultrasonic beam, the ultrasonic waves are reflected back to transducer 10 to produce an electrical signal. Alternatively, in the case of the presence of a two part transducer shown at 10 and 10' in Figure 2, when the piston 11 is at or near its top dead centre position, it prevents the ultrasonic beam from the transmitter 10 from arriving at the receiver 10'. When the piston 11 is out of the ultrasonic beam, the level of the output signal of the receiver 10' is much higher. In either case, the difference in level of the output signal from the transducer gives rise to first and second signals corresponding to the position of the piston in the cylinder when it enters the ultrasonic beam and when it leaves the ultrasonic beam during consecutive up and down strokes.

In use, the engine 1 has its crankshaft rotated, for instance by an electric motor, although it would be possible for the engine to run if this were more convenient. The transducer 10 produces a first signal every time the piston 11 enters the ultrasonic beam therefrom, and produces a second signal every time the piston moves out of the ultrasonic beam. The transducer 8 produces a series of signals corresponding to consecutive incremental positions of the crankshaft. In the case of a flywheel 3 having 120 teeth on its periphery, 120 pulses are produced by the transducer for each revolution of the crankshaft. The signal processing circuit 9 receives the signal from the transducer 10 and from the transducer 8 and processes the signal so as to indicate when the crankshaft is in a predetermined position, or when the piston is in a predetermined position according the requirements of the test. For instance, when checking the timing of the engine 1, it is necessary to know when the crankshaft is in a position such that any selected one of the pistons is at top dead centre. This position may be determined by the signal processing circuit 9 by counting the number of pulses provided by the transducer 8 between the occurrence of the signal from the transducer 10 indicating that the piston has entered the ultrasonic beam and the succeeding signal indicating that the piston has moved out of the ultrasonic beam. The top dead centre of the piston 11 will then have occurred at half the number of pulses between the two signals from the transducer 10. As the number of pulses per revolution of the crankshaft provided by the transducer 8 is known, it is then merely necessary to continue counting from the middle pulse between the two signals from the transducer 10 until that number has been achieved, at which time the piston 11 will again be at top dead centre and the crankshaft will be in the corresponding position.

In the case where the flywheel of the engine does not have a mark indicating top dead centre of one of the pistons it is thus possible to determine when the crankshaft is in this position. Alternatively, if the crankshaft does have a mark, it is possible to check the accuracy of this mark using the apparatus described above. The apparatus may be used with other methods of testing the engine so as to check the timing thereof, and allows such checking to be performed without the need to dismantle the engine. In general, the relative positions of the pistons of the engine will be known so that the transducer 10 may be placed adjacent any convenient cylinder of the engine on the exterior of the cylinder block. Accordingly, it is possible to perform a quick and reliable check on the engine timing.

In general, the output signal of the transducer 10 will be filtered so as to improve the signal-to-noise ratio or to facilitate the extraction of the required information from this signal in the signal processing circuit 9. Further, the transducer 10 should produce a sufficiently narrow band of ultrasonic waves to provide sufficient accuracy for the desired test on the engine. Also, the output signal from the transducer 10 may be processed so that the first and second signals occur when the piston 11 is in the same position relative to the cylinder on consecutive up and down strokes, respectively.

Transducer 8 may be replaced by a timing unit within module 9 to provide a time-based signal.

**Claims**

1. A method of indicating a predetermined position of a piston or crankshaft of a piston engine, comprising:— applying piston-position-responsive transducer means to a cylinder of the engine; obtaining from the transducer means signals dependent upon the position of the piston in the cylinder; and relating said signals to another signal representing the rotational position of the crankshaft or representing time; characterised in that:— the transducer means comprises an ultrasonic transmitter applied externally to a side of the engine to transmit an ultrasonic beam in the region of a given point of the cylinder, intermediate the ends of the piston stroke, for producing two ultrasonic signals responsive to a given part of the piston passing said given point of the cylinder on its upward and downward strokes, respectively, and an ultrasonic receiver applied externally to a side of the engine to receive said two ultrasonic signals.

2. A method as claimed in Claim 1 wherein the ultrasonic receiver is in unit with the ultrasonic transmitter.

3. A method as claimed in Claim 1 wherein the ultrasonic receiver is separate from the ultrasonic transmitter.

4. A method as claimed in Claim 3 wherein the side of the engine to which the ultasonic receiver is externally applied is opposite to the side to which the ultrasonic transmitter is externally applied.

5. A method as claimed in Claim 1 or 2 wherein the two ultrasonic signals result from reflection of the ultrasonic beam at the cylinder wall.

6. A method as claimed in any preceding claim wherein the two ultrasonic signals result from respective changes, caused by the piston, in the level of the ultrasonic energy received by the ultrasonic receiver.

7. A method as claimed in any preceding claim in which the ultrasonic beam has a frequency above 1 MHz.

8. An apparatus for indicating a predetermined position of a piston (11) or crankshaft of a piston engine (1) comprising:— a piston-position-responsive transducer means (10, 10') adapted to be, or capable of being, applied to a cylinder of the engine (1) to provide signals dependent upon the position of the piston (11) in the cylinder; means (8, 8') for providing another signal representing the rotational position of the crankshaft or representing time; and signal-processing means (9) to enable indication of said predetermined position from all of said signals; characterised in that:— the transducer means (10, 10') comprises an ultrasonic transmitter adapted to be, or capable of being, applied to a side of the engine (1) to transmit an ultrasonic beam in the region of a given point of the cylinder, intermediate the ends of the piston stroke, for producing two ultrasonic signals responsive to a given part of the piston (11) passing said given point of the cylinder on its upward and downward strokes, respectively, and an ultrasonic receiver adapted to be, or capable of being, applied externally to a side of the engine (1) to receive said two ultrasonic signals.

9. An apparatus as claimed in Claim 8 wherein the ultrasonic receiver is in unit with the ultrasonic transmitter.

10. An apparatus as claimed in Claim 8 or 9 wherein the ultrasonic receiver is adapted or capable of being arranged to receive the ultrasonic signals reflected from the cylinder wall.

11. An apparatus as claimed in Claim 8 wherein the ultrasonic receiver is separate from the ultrasonic transmitter.

12. An apparatus as claimed in Claim 11, wherein the ultrasonic receiver is arranged to receive ultrasonic energy transmitted through the cylinder.

13. An apparatus as claimed in any one of Claims 8 to 12 wherein the ultrasonic receiver is responsive to respective changes, caused by the piston, in the level of the ultrasonic energy received by the ultrasonic receiver, forming the two ultrasonic signals.

14. An apparatus as claimed in any one of Claims 8 to 13, wherein the ultrasonic transmitter is arranged to produce the ultrasonic beam with a frequency above 1 MHz.

15. An apparatus as claimed in any one of Claims 8 to 14, in which the means for providing said other signal comprises a detector (8, 8') arranged to detect teeth of a flywheel (3, 7) attached to the crankshaft of the engine.

16. An apparatus as claimed in Claim 15, wherein the detector comprises a light source and a light sensitive device adapted or capable of being arranged so that the teeth of the flywheel interrupt the path therebetween.

**Revendications**

1. Méthode pour indiquer une position prédéterminée d'un piston ou d'un vilebrequin d'un moteur à pistons comprenant l'application de moyens transducteurs répondant à la position du piston, à un cylindre de ce moteur; l'obtention à partir de ces moyens transducteurs de signaux dépendant de la position du piston dans le cylindre; et la corrélation de ces signaux à un autre signal représentatif de la position en rotation du vilebrequin ou représentatif du temps; caractérisé en ce que les moyens transducteurs comprennent un transmetteur ultrasonique appliqué à l'extérieur d'un côté du moteur pour transmettre un faisceau ultrasonique dans la région d'un point donné du cylindre intermédiaire entre les extrémités de la course du piston pour produire deux signaux ultrasoniques répondant au passage d'une partie donnée du piston en face dudit point donné du cylindre dans sa course vers le haut et vers le bas respectivement, et un récepteur ultrasonique appliqué à l'extérieur d'un côté du moteur pour recevoir ces deux signaux ultrasoniques.

2. Méthode conforme à la revendication 1 dans laquelle le récepteur ultrasonique forme une unité avec le transmetteur ultrasonique.

3. Méthode conforme à la revendication 1 dans laquelle le récepteur ultrasonique est séparé du transmetteur ultrasonique.

4. Méthode conforme à la revendication 3 dans laquelle le côté du moteur auquel le récepteur ultrasonique est appliqué extérieurement est opposé au côté auquel le transmetteur est appliqué extérieurement.

5. Méthode conforme à l'une des revendications 1 ou 2 dans laquelle les deux signaux ultrasoniques proviennent de la réflexion du faisceau ultrasonique sur la paroi du cylindre.

6. Méthode conforme à l'une quelconque des revendications précédentes dans laquelle les deux signaux ultrasoniques proviennent de changements respectifs produits par le piston dans le niveau de l'énergie ultrasonique reçue par le récepteur ultrasonique.

7. Méthode conforme à l'une quelconque des revendications précédentes dans laquelle le faisceau ultrasonique a une fréquence supérieure à 1 MHz.

8. Appareil pour indiquer une position prédéterminée d'un piston (11) ou du vilebrequin d'un moteur à pistons (1) comprenant:

des moyens transducteurs (10, 10') répondant à la position d'un piston adaptés pour être ou susceptibles d'être appliqués à un cylindre du moteur (1) pour fournir des signaux dépendant de la position du piston (11) dans le cylindre;

des moyens (8, 8') pour produire un autre signal représentant la position en rotation du vilebrequin ou représentant le temps; et

des moyens (9) de traitement du signal pour fournir une indication de ladite position prédéterminée à partir de tous ces signaux; caractérisé en ce que les moyens transducteurs (10, 10') comprennent:

un transmetteur ultrasonique adapté pour être ou susceptible d'être appliqué à un côté du moteur (1) pour transmettre un faisceau ultrasonique dans la région d'un point donné du cylindre intermédiaire entre les extrémités de la course du piston pour produire deux signaux ultrasoniques répondant au passage d'une partie donnée du piston (11) en face dudit point dy cylindre, dans sa course vers le haut et vers le bas respectivement; et

un récepteur ultrasonique adapté pour être ou susceptible d'être appliqué à un côté extérieur du moteur (1) pour recevoir les deux signaux ultrasoniques.

9. Appareil conforme à la revendication 8 dans lequel le récepteur ultrasonique forme une unité avec le transmetteur ultrasonique.

10. Appareil conforme à l'une des revendications 8 ou 9 dans lequel le récepteur ultrasonique est adapté ou susceptible d'être adapté pour recevoir les signaux ultrasoniques réfléchis par la paroi du cylindre.

11. Appareil conforme à la revendication 8 dans lequel le récepteur ultrasonique est séparé de l'émetteur ultrasonique.

12. Appareil conforme à la revendication 11 dans lequel le récepteur ultrasonique est disposé pour recevoir l'énergie ultrasonique transmise à travers le cylindre.

13. Appareil conforme à l'une quelconque des revendications 8 à 12 dans lequel le récepteur ultrasonique répond à des changements respectifs causés par le piston dans le niveau de l'énergie ultrasonique reçue par le récepteur ultrasonique ce qui forme les deux signaux ultrasoniques.

14. Appareil conforme à l'une quelconque des revendication 8 à 13 dans lequel l'émetteur ultrasonique est disposé pour produire un faisceau ultrasonique ayant une fréquence supérieure à 1 MHz.

15. Appareil conforme à l'une quelconque des revendications 8 à 14 dans lequel les moyens pour produire ledit autre signal comprennent un détecteur (8, 8') disposé pour détecter les dents d'un volant (3, 7) fixé au vilebrequin du moteur.

16. Appareil conforme à la revendication 15 dans lequel le détecteur comprend une source de lumière et un dispositif sensible à la lumière disposé ou susceptible d'être disposé de façon que les dents du volant interrompent le chemin entre source et dispositif.

**Patentansprüche**

1. Verfahren zum Anzeigen einer vorbestimmten Position eines Kolbens oder einer Kurbelwelle einer Kolbenmaschine, umfassend: Anbringung einer auf die Kolbenposition ansprechenden Wandlervorrichtung an einem Zylinder der Maschine; von der Wandlervorrichtung Ableitung von Signalen in Abhängigkeit von der Kolbenposition innerhalb des Zylinders; und Verknüpfung dieser Signale mit einem anderen Signal, das die Winkelposition der Kurbelwelle oder die Zeite darstellt; dadurch gekennzeichnet, daß: die Wandlervorrichtung einen von außen auf eine Seite der Maschine aufgesetzten Ultraschallsender, der einen Ultraschallstrahl in den Bereich eines gegebenen Punktes des Zylinders zwischen den Endpunkten des Kolbenhubes aussendet, zur Erzeugung von zwei Ultraschallsignalen ansprechend auf einen gegebenen Teil des Kolbens beim Durchgang durch den gegebenen Punkt des Zylinders jeweils während des Aufwärts- und Abwärtshubes und einen von außen an einer Seite der Maschine angebrachten Ultraschallempfänger zum Empfang der beiden Ultraschallsignale umfaßt.

2. Verfahren nach Anspruch 1, wonach der Ultraschallempfänger mit dem Ultraschallsender eine Einheit bildet.

3. Verfahren nach Anspruch 1, wonach der Ultraschallempfänger gesondert von dem Ultraschallsender angeordnet ist.

4. Verfahren nach Anspruch 3, wonach die Seite der Maschine, an der der Ultraschallempfänger von außen angebracht ist, derjenigen Seite gegenüberliegt, an der der Ultraschallsender von außen angebracht ist.

5. Verfahren nach Anspruch 1 oder 2, wonach die beiden Ultraschallsignale von der Reflexion des Ultraschallstrahls an der Zylinderwandung herrühren.

6. Verfahren nach einem der vorhergehenden Ansprüche, wonach die beiden Ultraschallsignale von entsprechenden, durch den Kolben bewirkten Änderungen des Pegels der von dem Ultraschallempfänger aufgenommenen Ultraschallenergie herrühren.

7. Verfahren nach einem der vorhergehenden Ansprüche, wonach der Ultraschallstrahl eine Frequenz oberhalb 1 MHz hat.

8. Vorrichtung zum Anzeigen einer vorbestimmten Position eines Kolbens (11) oder einer Kurbelwelle einer Kolbenmaschine (1), umfassend: eine auf die Kolbenposition ansprechende Wandlervorrichtung (10, 10'), die geeignet oder befähigt ist, an einem Zylinder der Maschine (1) angebracht zu werden oder zu sein, um Signale in Abhängigkeit von der Position des Kolbens (12) innerhalb des Zylinders bereitzustellen; eine Mittel (8, 8') zur Bereitstellung eines anderen Signals, das die Winkelposition der Kurbelwelle oder die Zeit darstellt und eine Signalverarbeitungsvorrichtung (9), die eine Erkennung der vorbestimmten Position aus allen diesen Signalen ermöglicht, dadurch gekennzeichnet, daß: die Wandlervorrichtung (10, 10') einen Ultraschallsender, der geeignet oder befähigt ist, an einer Seite der Maschine (1) angebracht zu werden oder zu sein, um einen Ultraschallstrahl in den Bereich eines gegebenen Punktes des Zylinders zwischen den Endpunkten des Kolbenhubes auszusenden und um zwei Ultraschallsignale ansprechend auf einen gegebenen Teil des Kolbens (11) beim Durchgang durch den gegebenen Punkt des Zylinders jeweils während des Aufwärts- und Abwärtshubes zu erzeugen, und einen Ultraschallempfänger umfaßt, der geeignet oder befähigt ist, von außen an einer Seite der Maschine zum Empfang der beiden Ultraschallsignale angebracht zu werden oder zu sein.

9. Vorrichtung nach Anspruch 8, wonach der Ultraschallempfänger mit dem Ultraschallsender eine Einheit bildet.

10. Vorrichtung nach Anspruch 8 oder 9, wonach der Ultraschallempfänger geeignet oder befähigt ist, zum Empfang der von der Zylinderwand reflektierten Ultraschallsignale angebracht zu werden oder zu sein.

11. Vorrichtung nach Anspruch 8, wonach der Ultraschallempfänger getrennt von dem Ultraschallsender angeordnet ist.

12. Vorrichtung nach Anspruch 11, wonach der Ultraschallempfänger zum Empfang von durch den Zylinder übertragener Ultraschallenergie angeordnet ist.

13. Vorrichtung nach einem der Ansprüche 8 bis 12, wonach der Ultraschallempfänger jeweils auf durch den Kolben bewirkte Änderungen im Pegel der durch den Ultraschallempfänger empfangenen Ultraschallenergie anspricht und die beiden Ultraschallsignale bildet.

14. Vorrichtung nach einem der Ansprüche 8 bis 12, wonach der Ultraschallsender zur Erzeugung des Ultraschallstrahls mit einer Frequenz oberhalb 1 MHz ausgebildet ist.

15. Vorrichtung nach einem der Ansprüche 8 bis 14, wonach das Mittel zur Bereitstellung des genannten weiteren Signals einen Detektor (8, 8') umfaßt, der zur Erfassung von Zähnen eines Schwungrades (3, 7), das an die Kurbelwelle der Maschine angesetzt ist, eingerichtet ist.

16. Vorrichtung nach Anspruch 15, wonach der Detektor eine Lichtquelle und eine lichtempfindliche Vorrichtung umfaßt und geeignet oder fähig ist, so angeordnet zu sein, daß die Zähne des Schwungrades den Lichtweg unterbrechen.

FIG.1.

FIG.2.